# EUROPEAN PATENT SPECIFICATION

(11) **EP 3 973 447 B1**
(45) Date of publication and mention of the grant of the patent: **24.01.2024**
(21) Application number: 20743588.4
(22) Date of filing: 17.06.2020
(51) Int. Cl.: G06V 10/25, G06V 40/10

(54) **SURFACE RECOGNITION**
OBERFLÄCHENERKENNUNG
RECONNAISSANCE DE SURFACE

(30) Priority: 19.06.2019 GB 201908806
(43) Date of publication of application: 30.03.2022
(73) Proprietor: SIGNATURE ROBOT LTD, London, W4 3DR (GB)
(72) Inventor: LAWS, Stephen George, London SW6 4DU (GB)
(74) Representative: Korenberg, Alexander Tal
(86) International application number: PCT/EP2020/066824
(87) International publication number: WO 2020/254443

(56) References cited:
- CN-A- 108 332 689
- US-A1- 2013 338 479
- US-A1- 2017 205 385
- ZHAO CHENG ET AL: "A fully end-to-end deep learning approach for real-time simultaneous 3D reconstruction and material recognition", 2017 18TH INTERNATIONAL CONFERENCE ON ADVANCED ROBOTICS (ICAR), IEEE, 10 July 2017 (2017-07-10), pages 75-82, XP033147072, DOI: 10.1109/ICAR.2017.8023499 [retrieved on 2017-08-30] cited in the application
- ORUN A B ET AL: "Material identification by surface reflection analysis in combination with bundle adjustment technique", PATTERN RECOGNITION LETTERS, vol. 24, no. 9, June 2003 (2003-06), pages 1589-1598, XP085040879, ISSN: 0167-8655, DOI: 10.1016/S0167-8655(02)00398-7

## Description

The present disclosure relates to the field of classifying surfaces using machine learning, in particular as applied to biological tissues.

In many contexts, it is desirable to identify the structure, composition or material, in short, the surface type, of a surface or of surface portions making up the surface. One example application where this may be useful is computer aided orthopaedic surgery, where the ability to identify surface types of biological tissues (and surgical tools) and segment imaged surfaces accordingly could lead to more intelligent and adaptive surgical devices, although it would of course be appreciated that identification of surface types is more broadly applicable to many areas of technology. A state-of-the-art deep learning approach specifically adapted for the recognition of biological tissues based on scene analysis achieved recognition accuracies of around 80%, see C. Zhao, L. Sun, and R. Stolkin, "A fully end-to-end deep learning approach for real-time simultaneous 3D reconstruction and material recognition," 2017 18th Int. Conf. Adv. Robot. ICAR 2017, pp. 75-82, 2017.

US 2017/0205385 relates to a method and device for detection of bone in meat which identifies fragments larger than about 1 mm using spectral optical imaging and ultrasound. Spectral imaging can detect foreign material proximate to the surface and ultrasound can detect material within the sample. The sample is irradiated by light and reflected light or Raman scattered light measured. The sample is similarly irradiated by ultrasound and reflected or transmitted sound waves give a set of amplitude data points, which include temporal delay. These data points are then processed by statistical methods to derive a set of vectors in n-dimensional space, which are compared to a calibrated data set of derived vectors which have distinct identifying loci for each type of surface, are indicative of the presence or absence of defects.

A.B. Orun, A. Alkis: "Material identification by surface reflection analysis in combination with bundle adjustment technique", Pattern Recognition Letters, Vol. 24, No. 9, pages 1589-1598, June 2003 aims to investigate a unified method for surface analysis and remote surface identification. The disclosure includes two independent and simultaneously operating techniques which exploit both the local surface geometry (by bundle adjustment technique) and the microstructure of the material surface (whose image is generated by laser-surface interaction).

CN 108 332 689 A relates to an optical measuring system and method for detecting surface roughness and surface damage, which is applied to the detection of surface roughness and surface damage of a smooth metal workpiece.

US 2013/0338479 A1 describes a method and apparatus for optically scanning a field of view, the field of view including at least part of an organ as exposed during surgery, and for identifying and classifying areas of tumor within the field of view. The apparatus obtains a spectrum at each pixel of the field of view, and classifies pixels with a kNN-type or neural network classifier previously trained on samples of tumor and organ classified by a pathologist. Embodiments use statistical parameters extracted from each pixel and neighboring pixels. Results are displayed as a color-encoded map of tissue types to the surgeon. In variations, the apparatus provides light at one or more fluorescence stimulus wavelengths and measures the fluorescence light spectrum emitted from tissue corresponding to each stimulus wavelength. The measured emitted fluorescence light spectra are further used by the classifier to identify tissue types in the field of view.

In overview, the present disclosure relates to the application of machine learning to the classification of surface materials using images of spots of lights, such as resulting from a laser beam impinging the surface. Surprisingly, a classifier trained using such spot images, resulting from light beams impinging the surface, achieves excellent classification results. This is in spite of a lack of fine surface details in these images as compared to a more uniformly lit larger scene that would at first glance appear to contain more information on the surface type. Classifiers trained according to the present disclosure achieve classification accuracies on biological tissues significantly above 90% using a number of well-known classifier architectures. Without implying any limitation, it is believed that the features enabling identification of surface types result from the scattering properties of the surface in question and the nature of the way the beams are reflected (diffuse, or in some cases specular).

In some aspects of the disclosure, a method of training a computer-implemented classifier for classifying a surface portion of a surface as one of a predefined set of surface types is disclosed. The classifier takes an input image of a surface portion as an input and produces an output indicating a surface type of the predefined set. The method comprises obtaining a data set of input images of surface portions. Each input image comprises an image of a spot on a respective surface portion resulting from a beam of light generated by a light source and impinging on the respective surface portion. The data set associates each input image with a corresponding surface type. The method further comprises training the classifier using the data set.

The set of predefined surface types comprises biological tissue surfaces, for example one or more of the surface types of muscle, fat, bone and skin surfaces. The surface types may additionally comprise a metallic surface. It will be understood that the methods disclosed in the present application are equally applicable to other surface types.

Obtaining the data set may comprise shining a light beam onto a plurality of surface portions of different surface types, obtaining an input image for each of the surface portions and associating each input image with the corresponding surface types. Alternatively, the data set may have been prepared previously, so that obtaining the data set comprises retrieving the data set from a data repository or any other suitable computer memory.

Obtaining the input image comprises detecting the spot in a captured image and extracting a cropped image of the captured image comprising the spot and a border around the spot. The spot may be detected using intensity thresholding, for example detecting local intensity maxima, identifying a respective spot area using a threshold as a fraction of the maxima, for example brighter than 90% of each maximum and designating pixels exceeding the threshold as part of the spot area. Extracting the cropped image may comprise defining a cropped area that comprises the spot area and may be centred on the maximum or the spot area. The cropped area may be of a predefined size or number of pixels, for example corresponding to an input size / number of inputs of the classifier. The cropped area may alternatively be determined based on the spot area to contain the spot area with a margin around it. In the latter case, extracting the cropped image may comprise resizing or scaling the cropped image to the input size (for example number of pixels) corresponding to the input of the classifier. The input image comprises a relatively bright spot, bright relative to a surrounding area, and the surrounding area. The input image comprises at least a quarter of image pixels corresponding to the spot, with at least a quarter of image pixel having a pixel value in the top ten percentiles of pixel values in the input image. In some cases with a particularly bright spot, one third of pixel values or more may be in the top ten percentile.

Training the classifier may comprise providing the input images of the data set as inputs to the classifier; obtaining outputs of the classifier in response to the images; comparing the outputs of the classifier with the corresponding surface type for each input image to compute an error measure indicating a mismatch between the outputs and corresponding surface types; and updating parameters of the classifier to reduce the error measure. Any suitable training method may be used to train the classifier, for example adjusting the parameters using gradient descent.

Many suitable computer classifiers will be known to the person skilled in the art and the present disclosure is not limited to any particular one. Suitable classifiers include artificial neural networks and in particular convolutional neural networks. For the purpose of illustration rather than limitation, examples of artificial neural networks and convolutional neural networks are discussed below.

An artificial neural network (ANN) is a type of classifier that arranges network units (or neurons) in layers, typically one or more hidden layers between an input layer and an output layer. Each layer is connected to its neighbouring layers. In fully connected networks, each network unit in one layer is connected to each unit in neighbouring layers. Each network unit processes its input by feeding a weighted sum of its inputs through an activation function, typically a non-linear function such as a rectified linear function or sigmoid, to generate an output that is fed to the units in the next layer. The weights of the weighted sum are typically the parameters that are being trained. An artificial neural network can be trained as a classifier by presenting inputs at the input layer and adapting the parameters of the network to achieve a desired output, for example increasing an output value of a unit corresponding to a correct classification for a given input. Adapting the parameters may be done using any suitable optimisation technique, typically gradient descent implemented using backpropagation.

A convolutional neural network (CNN) may comprise an input layer that is arranged as a multidimensional array, for example a 2D array of network units for a grayscale image, a 3D array or three layered 2D arrays for an RGB image, etc, and one or more convolutional layers that have the effect of convolving filters, typically of varying sizes and/or using different strides, with the input layer. The filter parameters are typically learned as network weights that are shared for each unit involved in a given filter. Typical network architectures also include an arrangement of one or more non-linear layers with the one or more convolutional layers, selected from, for example pooling layers or rectified linear layers (ReLU layers), typically stacked in a deep arrangement of several layers. The output from these layers feeds into a classification layer, for example a fully connected, for example non-linear, layer or a stack of fully connected, for example non-linear, layers, or a pooling layer. The classification layer feeds into an output layer, with each unit in the output layer indicating a probability or likelihood score of a corresponding classification result. The CNN is trained so that for a given input it produces an output in which the correct output unit that corresponds to the correct classification result has a high value or, in other words, the training is designed to increase the output of the unit corresponding to the correct classification. Many examples of CNN architectures are well-known in the art and include, for example, googLeNet, Alexnet, densenet101 or VGG-16, all of which can be used to implement the present disclosure.

In further aspects, a method of classifying a surface portion as one of a predefined set of surface types is disclosed, using a classifier as described above. The method comprises obtaining an input image of a spot on the surface portion as described above and providing the input image as an input to the classifier, which has been trained as described above. The method further comprises obtaining an output of the classifier in response to the input image and determining a surface type of the surface portion based on the output.

The method may comprise obtaining a plurality of input images, each input image corresponding to a spot due to a beam impinging the surface and obtained as described above for a respective surface portion of the surface; providing each input image as an input to a classifier trained as described above; obtaining an output of the classifier in response to each input image; and determining a surface type of the respective surface portion based on each output. The method may further comprise altering an image of the surface for display on a display device to visually indicate in the displayed image the corresponding determined surface type for each of the surface portions. The method may comprise displaying and/or storing the resulting image.

The respective beams may be projected onto the surface according to a predetermined pattern and the method may comprise analysing a pattern of the spots on the surface to determine a three-dimensional shape of the surface. The method may comprise rendering a view of the three-dimensional shape of the surface visually indicating the determined surface type for each of the surface portions. Determining depths and/or a three-dimensional shape of a surface using a projected pattern of spots is well know and many techniques exists to do so. Such techniques are implemented in the Xbox^{™} Kinect^{™} input systems, Apple^{™}'s FaceID^{™} and generally in three dimensional scanners. See for example M. J. Landau, B. Y. Choo, and P. A. Beling, "Simulating Kinect Infrared and Depth Images," IEEE Trans. Cybern., vol. 46, no. 12, pp. 3018-3031, 2016; M. Bleyer, C. Rhemann, and C. Rother, "PatchMatch Stereo - Stereo Matching with Slanted Support Windows," in Proceedings of the British Machine Vision Conference 2011, 2011, no. 1, pp. 14.1-14.11; A. Geiger, M. Roser, and R. Urtasun, "Efficient large-scale stereo matching," Lect. Notes Comput. Sci. (including Subser. Lect. Notes Artif. Intell. Lect. Notes Bioinformatics), vol. 6492 LNCS, no. PART 1, pp. 25-38, 2011; H. Hirschm, "SGM: Stereo Processing by Semi-Global Matching.pdf," Tpami, pp. 1-14, 2007; I. Ernst et al., "Mutual Information Based Semi-Global Stereo Matching on the GPU," Lecture notes in computer science., vol. 5358. Berlin , pp. 33-239, 2008; A. Hosni, C. Rhemann, M. Bleyer, C. Rother, and M. Gelautz, "Fast cost-volume filtering for visual correspondence and beyond," IEEE Trans. Pattern Anal. Mach. Intell., vol. 35, no. 2, pp. 504-511, 2013; M. H. Ju and H. B. Kang, "Constant time stereo matching," IMVIP 2009 - 2009 Int. Mach. Vis. Image Process. Conf., pp. 13-17, 2009; and S. O. Escolano et al., "HyperDepth: Learning Depth from Structured Light without Matching," 2016 IEEE Conf. Comput. Vis. Pattern Recognit., pp. 5441-5450, 2016, all of which are incorporated by reference in this disclosure. See also the Wikipedia article as edited on 15 May 2019 at 18:11 on structured light 3D scanners: https://en.wikipedia.org/w/index.php?title=Structured-light 3D scanner&oldid=897239088, incorporated by reference in this disclosure. The three-dimensional shape may be used for generating display views or for other uses, for example as an input to a robot controller controlling a robotic manipulation of or on the surface or a portion of the surface, for example in robotic surgery.

Aspects of the disclosure extend to a computer-implemented classifier, for example an artificial neural network or more specifically a convolutional neural network, trained as described above. The classifier, in the described methods or otherwise, may take as a further input one or more values indicative of a distance between a light source used to generate the beam and the surface and/or a distance between an image capture device used to capture the image and the surface. Aspects of the disclosure further extend to one or more tangible computer-readable media comprising coded instructions that, when run on a computing device, implement a method or a classifier as described above.

In a further aspect of the disclosure, a system for classifying a surface portion as one of a predefined set of surface types is disclosed. The system comprises a light source for generating one or more light beams; an image capture device, for example a camera or Charge Coupled Device sensor, for capturing images of respective spots resulting from the one or more light beams impinging on a surface; and a processor coupled to the image capture device and configured to implement a method as described above. The system may comprise one or more computer readable media as described above.

In the described system and methods, the light may have a wavelength or wavelength band in the range of 400-60nm, preferably 850nm or in the near infrared spectrum and the beam diameter may be less than 3mm at the surface. The light source may be configured accordingly. The light source may be configured to emit coherent light, for example of relevant wavelength and beam size. The light source may comprise a laser or Light Emitting Diode (LED). The light source may comprise a suitable arrangement for creating a pattern of beams, for example the light source may comprise an optical element to generate a pattern of beams, such as a diffraction grating, hologram, spatial light modulator (SLM - such as a liquid crystal on silicon SLM) or steerable mirror.

The system may comprise one or more further image capture devices that are configured to capture additional images, for example from a different angle, which may be advantageous to deal with any occlusions that may occur in some configurations when the shape of the surface is accentuated in depth. Images from the image capture devices may be merged to form a composite image from which input images may be extracted or the respective images from each image capture device may be processed separately to provide respective sets of inputs to the classifier and the classification results corresponding to each respective set of inputs can be merged, for example by averaging output values between sets for each surface portion represented in both sets or picking a maximum output value across the sets for each surface portion represented in both sets.

Specific embodiments are now described by way of example only for the purpose of illustration and with reference to the accompanying drawings, in which:
Figures 1A and 1B illustrate a system for classifying surface portions;
Figures 2A, 2B and 2C illustrate an intensity image of a spot resulting from a laser beam impinging a surface portion and beam patterns for generating multiple surface spots for depth sensing;
Figure 3 illustrates a workflow for generating a material indicating display of a scene view;
Figure 4 illustrates processes for training a surface type classifier;
Figure 5 illustrates processes for classifying a surface portion;
Figure 6 illustrates processes for classifying a plurality of surface portions;
Figure 7 illustrates processes combining the process of Figure 6 with three-dimensional scene reconstruction;
Figure 8 illustrates spot images for skin, muscle, fat and bone surface portions; and
Figure 9 illustrates a computer system on which disclosed methods can be implemented.

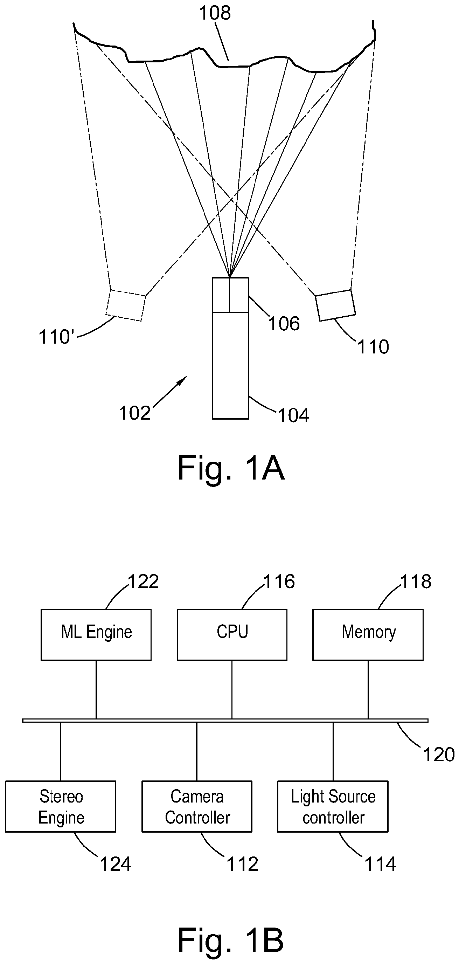

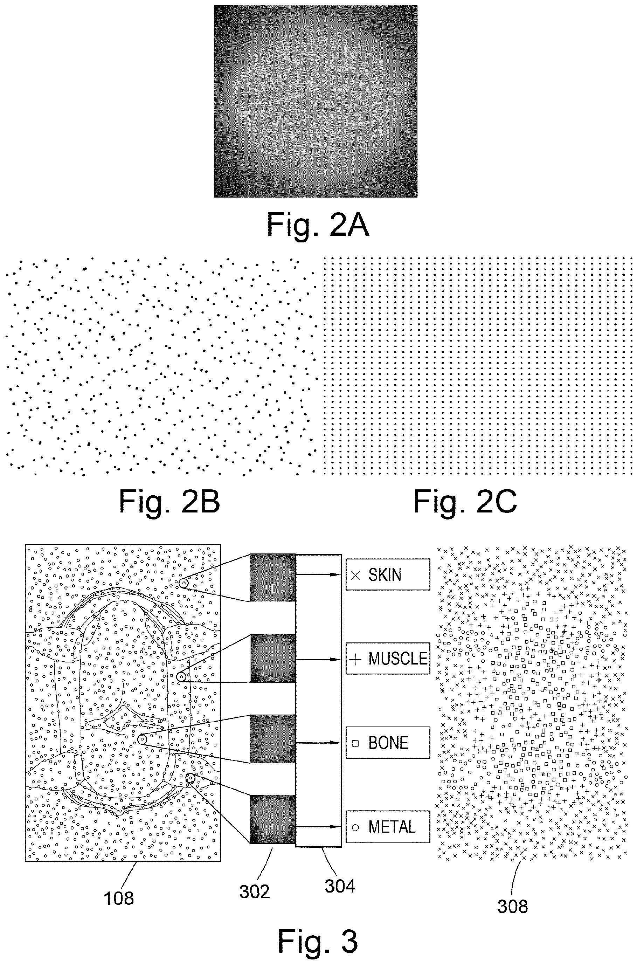

With reference to Figures 1A and 1B, a system for classifying surface portions comprises a light source 102 comprising a laser 104 coupled to an optical element 106, for example a diffraction grating, hologram, SLM or the like, to split the beam from the laser 104 into a pattern of beams that give rise to spots of light on a surface 108 when impinging on the surface 108. A single such spot is illustrated in Figure 2A and pseudo-random and regular patterns of spots resulting from a respective beam pattern on a flat surface are illustrated in Figures 2B and 2C. Some embodiments use other light sources than a laser, for example an LED or a laser diode. The wavelength of the emitted light may be, for example, in the red or infrared part of the spectrum, or as described above and the beam diameter may be 3mm or less (in case of a pattern being generated other than by collimated beams, for example using a hologram to generate a pattern on the surface, a corresponding spot size of 3mm or less can be defined on the surface or a notional flat surface coinciding with the surface). An image capture device 110, such as a camera, is configured to capture images of the pattern of spots on the surface 108. An optional second (or further) image capture device 110' may be included to deal with potential occlusions by capturing an image from a different angle than the image capture device.

A camera controller 112 is coupled to the image capture device 110 (and 110' if applicable) to control image capture and receive captured images. A light source controller 114 is coupled to the laser 104 and, if applicable, the optical element 106 to control the beam pattern with which the surface 108 is illuminated. A central processor 116 and memory 118 are coupled to the camera and light source controllers 112, 114 by a data bus 120 to coordinate pattern generation and image capture and pre-process captured images to produce images of surface portions containing a spot each. A machine learning engine 122 is also connected to the data bus 120, implementing a classifier, for example an ANN or CNN, that takes pre-processed spot images as input and outputs surface classifications. Further, in some embodiments, a stereo engine 124 is connected to the data bus 120 to process the image of the surface 108 to infer a three-dimensional shape of the surface. The central processor is configured to use the surface classifications and where applicable three-dimensional surface shape to generate an output image for display on a display device (not shown) via a display interface (also not shown). Other interfaces, such as interfaces for other inputs or outputs, like a user interface (touch screen, keyboard, etc) and network interface are also not shown.

It will be understood, that stereo reconstruction of the surface and the corresponding components are optional, as is the projection of a pattern of a plurality of spots, with some embodiments only having a single spot projected, so that the optical element 106 may not be required. Alternative arrangements for generating a beam pattern are equally possible. It will further be appreciated that the described functions can be distributed in any suitable way. For example, all computation may be done by the central processor 116, which in turn may itself be distributed (as may be the memory 118). Functions may be distributed between the central processor 116 and any co-processors, for example engines 122,124 or others, in any suitable way. Likewise, any or all described computations may equally be performed remotely in the cloud on dedicated servers or services such as AWS^{™}, with the system adapted appropriately.

By way of overview with reference to Figure 3, a general framework for generating a surface type map or annotated image comprises projecting a pattern of spots onto a surface 108, in the illustrated case a surgical site. Cropped images 302 of the spots are extracted and passed through a classifier 304 to generate a surface type label 306 for each cropped image 302. The known positions of the spots in the cropped images and surface type labels 306 are then used to generate a surface type map 308 indicating for each spot the corresponding surface type. The map may then in some embodiments be superimposed on an image of the surface 108 for display, or the map may be used in the control of a robotic system, for example a robotic surgery system. In either case, in some embodiments a three-dimensional model of the surface 108 is inferred from the pattern of spots using structured light or related techniques and the spots and corresponding surface type labels may be located in this model, either for the generation of views for display or control of a robotic system such as a robotic surgery system. It will be appreciated that a robotic surgery system is merely an example of applications of this technique, which may be used for control of other robotic systems where surface types may be relevant for control.

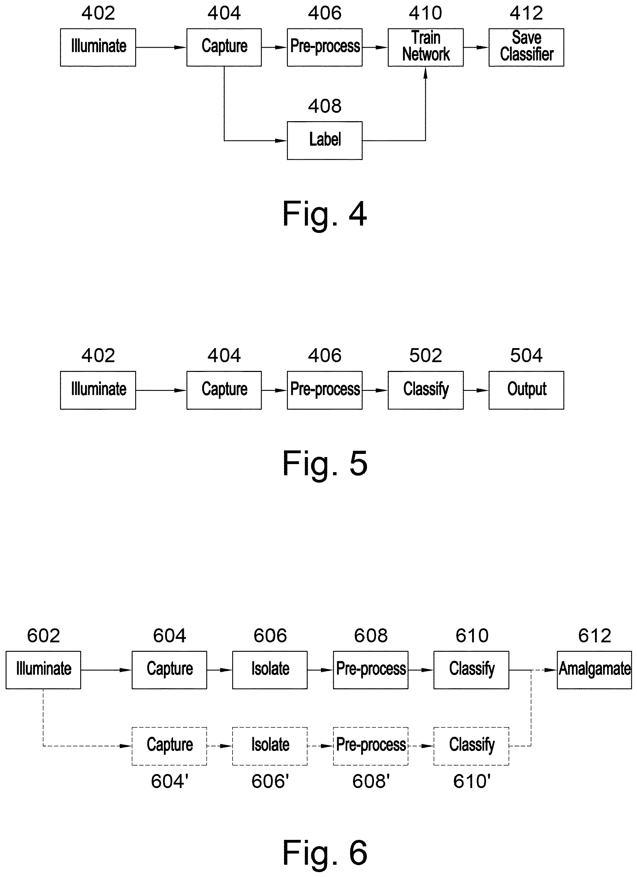

With reference to Figure 4, a process of training a classifier such as a CNN comprises illuminating 402 surface portions to be classified with a bright concentrated light source, for example as described above, to generate at least one bright spot on each surface portion. Illumination may be in parallel forming multiple bright spots at the same time, for example by passing a laser beam through an optical element as described above, or sequentially by forming one spot after the other on the surface portions, for example by moving a single laser source, or a combination of parallel (spot pattern) and sequential illumination. Images, for example grey scale or intensity images, of each spot are captured 404 using an image capture. For example, colour images may be captured and then converted to intensity images. Multiple spots may be captured in a single image or each image may contain a single spot. The images are pre-processed 406 to segment the captured images to isolate the bright spots, for example using brightness thresholding around brightness peaks, and crop the image around the segmented spots. Where needed, pre-processing 406 may comprise resizing the cropped images to a size suitable as input to a classifier, for example the classifier 304. The cropped images are further labelled 408, for example by manual inspection of the scene context of each cropped image, as one of a pre-defined set of surface type labels, for example skin, bone, muscle, fat, metal, etc. The cropped images and corresponding labels form a dataset that is used to train 410 the classifier, for example a CNN. Training may proceed for a number of epochs as described above until a classification error has reached a satisfactory level, or until the classifier has converged, for example as judged by reducing changes in the error between epochs, or the classifier may be trained for a fixed number of epochs. A proportion of the data set may be saved for evaluation of the classifier as a test dataset to confirm successful training. Once training is complete, the classifier, for example set of architecture hyperparameters and adjusted parameters, is stored 412 for future use. The adjusted parameters may be the network weights for an ANN or CNN classifier.

Once a trained classifier is stored ready for use, with reference to Figure 5, classification of a surface portion comprises a process of illuminating 402, capturing 404, pre-processing 406 an image of a bright spot on the surface portion, as described above with reference to Figure 4. The cropped image is then applied 502 to the trained classifier to classify the surface type as one of the predefined surface types and an output is generated 504 indicating the surface type. For example, in the case of a CNN used as a classifier, generating the output may comprise accessing the activations of the output units of the CNN, selecting the output unit with the highest activation and outputting the corresponding surface type as an inferred surface type label for the surface portion.

With reference to Figure 6, generation of a spatial map of surface types comprises illuminating 602 a surface with a pattern of beams to form a pattern of spots - the pattern may be formed by illumination with the pattern at once or by illumination with a sequence of beams to form the pattern. The resulting pattern of spots is captured 604 with an image capture device, individual spots are isolated 606 and the resulting cropped images pre-processed 608, for example as described above. The pre-processed images are then classified 610 as described above.

Isolating 606 the spots includes determining the coordinates of each isolated spot (for example with reference to the brightness peak or a reference point in the cropped image) in a frame of reference. The frame of reference may for example be fixed on the image capture device and the transformation may be obtained from knowledge of the disposition of the image capture device relative to the imaged surface. The surface portion corresponding to each imaged spot is classified 610 as described above and the classification results for each spot / surface portion are amalgamated 612 into a surface type map by associating the respective surface type for each spot / surface portion with the respective determined coordinates in the map.

The map may be used for example for automated control of a robot, such as a surgical robot or may be displayed, for example associating each surface type with a corresponding visual label and overlaying the resulting visual map over an image of the surface. The overlay of the map on the image of the surface may be based on the known coordinate transformation between the surface and the image capture device, or the map coordinates may already be in the frame of reference of the image capture device, as described above. The spots may be generated by infrared light, in which case they are not visible to a human observer in the image and the surface labels can be directly superimposed without additional visual distraction by way of a colour code or other symbols. Alternatively, visible spots for visible light patterns can be retained in the image or may be removed by image processing.

As described above, in some embodiments multiple image capture devices, for example a second image capture device 110' in addition to the image capture device 110, are used to capture images of the surface, for example to deal with the potential of occlusion of portions of the surface in one image capture device view. In these embodiments, steps 604 to 610 are repeated for the image(s) captured by the second or further image capture devices, as indicated by reference signs 604' to 610' in Figure 6. The results for both image capture devices (positions determined at steps 606 and 606' and classification results for steps 610 and 610') are then amalgamated at step 612. Specifically, where one of the image capture devices could not capture an occluded area, the corresponding area of the map is labelled using the classification obtained based on the image captured by the other image capture device and vice versa. For regions where both image capture devices captured an image of the same spot (regions where neither image capture device view is occluded), the classification results are combined for the respective spots in the two images, for example by averaging the output activations or classification probabilities, or by picking the classification result that has the highest activation or classification probability amongst all the classification results of the images of the same spot combined.

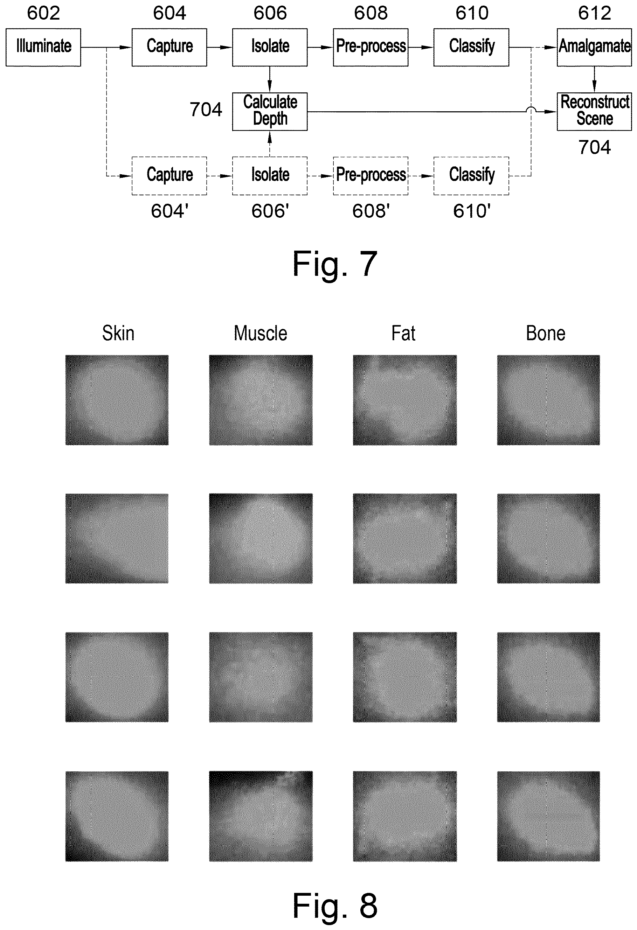

The registered classification of surface portions as described above with reference to Figure 6 can be combined with stereo techniques such as structured light techniques to provide a surface type labelled three-dimensional model of a surface, as is now described with reference to Figure 7. Embodiments that comprise such three-dimensional surface reconstruction comprise the same steps as described above with the addition of a step of calculating 702 depth, for example for each pixel of the surface, or at each identified spot, based on the pattern of spots in the image. The resulting depth information is combined 704 with the surface type map resulting from step 612 to form a reconstructed scene in terms of a three-dimensional model of the imaged surface labelled with surface types based, for example, on a suitable mesh with colour coded cells or tetrahedrons centred on the coordinates identified for each classified spot. Depth may be defined as a distance to an actual or notional camera or as a position along a direction extending away from the surface, for example normal to the surface, such as normal to a plane corresponding to a plane along which the surface extends.

In a specific example, images obtained using systems and methods described above were used to train a number of known CNN architectures. A Class II red laser (650±10nm, <1 mW) was used to project spots onto four different tissues obtained from a cadaver: bone; skin, fat and muscle. A 1280x720 pixel CMOS camera was used to capture 1000 images of each tissue type being impinged by the laser. The images were captured from multiple areas of the cadaver at various distance from the camera and laser, resulting in a range of spot sizes. The full 1280x720 images were cropped to isolate the pixels around the laser spots using intensity / greyscale brightness thresholding based on the local maxima within the image, with a cropped area suitably scaled to capture the full perimeter of the laser spot and the cropped images were resized to 224x224 pixels using bicubic interpolation to fit the input of the CNN architectures used, resulting in images as illustrated in Figure 3, examples of which are shown in Figure 8 for each tissue type. A pre-trained googLeNet provided with the MATLAB^{™} Deep Learning Toolbox (MATLAB R2018b, Mathworks Inc.) was used as the classifier. The final two layers (fully connected layer and output layer) were modified to reflect the four possible classification outcomes, that is each of these layers was adapted to be a 1x1x4 layer (in this case, the number of units will in general correspond to the number of classification classes).

The network weights were initialised with pre-trained weights available in the Deep Learning Toolbox, which in particular provides usefully adapted filters in the convolution layers, and a non-zero learning rate was used for the entire network so that all weights, including in the convolution layers, were adapted during training. The network was trained for 100 epochs using half of the images of each tissue type (total 2000 images) with the remaining images reserved for testing the recognition accuracy of the trained network.

Recognition accuracy was found to be mostly in the high nineties: skin (99.2%); bone (97.8%); muscle (97.0%); and fat (93.4%), with respective false-positive rates of 0.8%, 2.2%, 97.0% and 6.6% and false-negative rates of 2.2%, 1.2%, 5.5% and 3.7%. The average recognition accuracy was 96.9%. Similarly, promising results were obtained using other CNN architectures, specifically Alexnet, Denenet101 and VGG-16 again using the MATLAB^{™} Deep Learning Toolbox, with the output layer adapted accordingly, as described above. Average recognition accuracy for these architectures on the same training and test data was evaluated as 95%, 93% and 92%. Notably, the dataset used in this disclosure provides excellent generalisation on a large test data set with high correct recognition rates using out of the box network architectures so that the skilled person will appreciate that the high recognition rates are likely to be due to the chosen image type having a high information content in their brightness structure with respect to surface types, irrespective of the specific nature of the classifier used.

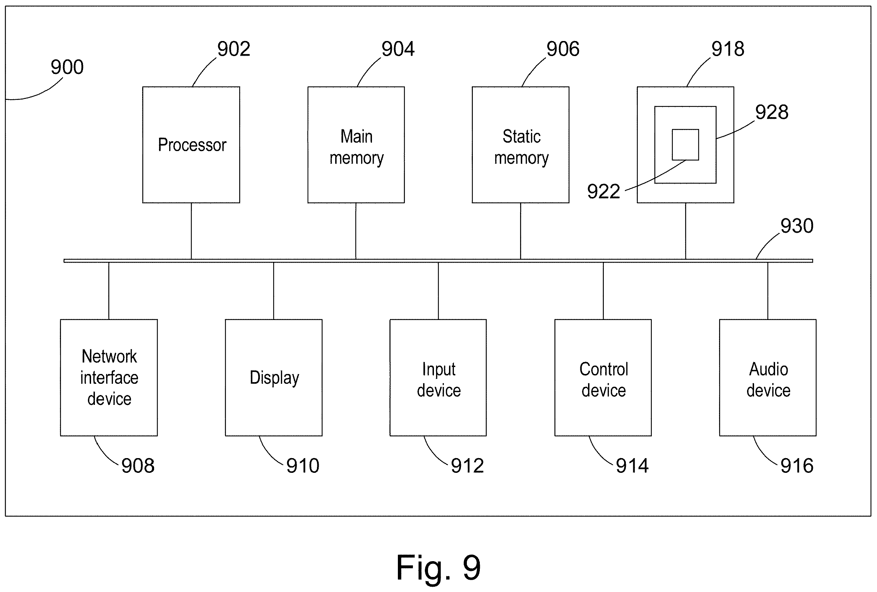

Figure 9 illustrates a block diagram of one implementation of computing device 900 within which a set of instructions, for causing the computing device to perform any one or more of the methodologies discussed herein, may be executed. In alternative implementations, the computing device may be connected (e.g., networked) to other machines in a Local Area Network (LAN), an intranet, an extranet, or the Internet. The computing device may operate in the capacity of a server or a client machine in a client-server network environment, or as a peer machine in a peer-to-peer (or distributed) network environment. The computing device may be a personal computer (PC), a tablet computer, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single computing device is illustrated, the term "computing device" shall also be taken to include any collection of machines (e.g., computers) that individually or jointly execute a set (or multiple sets) of instructions to perform any one or more of the methodologies discussed herein.

The example computing device 900 includes a processing device 902, a main memory 904 (e.g., read-only memory (ROM), flash memory, dynamic random access memory (DRAM) such as synchronous DRAM (SDRAM) or Rambus DRAM (RDRAM), etc.), a static memory 906 (e.g., flash memory, static random access memory (SRAM), etc.), and a secondary memory (e.g., a data storage device 918), which communicate with each other via a bus 930.

Processing device 902 represents one or more general-purpose processors such as a microprocessor, central processing unit, or the like. More particularly, the processing device 902 may be a complex instruction set computing (CISC) microprocessor, reduced instruction set computing (RISC) microprocessor, very long instruction word (VLIW) microprocessor, processor implementing other instruction sets, or processors implementing a combination of instruction sets. Processing device 902 may also be one or more special-purpose processing devices such as an application specific integrated circuit (ASIC), a field programmable gate array (FPGA), a digital signal processor (DSP), network processor, or the like. Processing device 902 is configured to execute the processing logic (instructions 922) for performing the operations and steps discussed herein.

The computing device 900 may further include a network interface device 908. The computing device 900 also may include a video display unit 910 (e.g., a liquid crystal display (LCD) or a cathode ray tube (CRT), an alphanumeric input device 912 (e.g., a keyboard or touchscreen), a cursor control device 914 (e.g., a mouse or touchscreen), and an audio device 916 (e.g., a speaker).

The data storage device 918 may include one or more machine-readable storage media (or more specifically one or more non-transitory computer-readable storage media) 928 on which is stored one or more sets of instructions 922 embodying any one or more of the methodologies or functions described herein. The instructions 922 may also reside, completely or at least partially, within the main memory 904 and/or within the processing device 902 during execution thereof by the computer system 900, the main memory 904 and the processing device 902 also constituting computer-readable storage media.

The various methods described above may be implemented by a computer program. The computer program may include computer code arranged to instruct a computer to perform the functions of one or more of the various methods described above. The computer program and/or the code for performing such methods may be provided to an apparatus, such as a computer, on one or more computer readable media or, more generally, a computer program product. The computer readable media may be transitory or non-transitory. The one or more computer readable media could be, for example, an electronic, magnetic, optical, electromagnetic, infrared, or semiconductor system, or a propagation medium for data transmission, for example for downloading the code over the Internet. Alternatively, the one or more computer readable media could take the form of one or more physical computer readable media such as semiconductor or solid-state memory, magnetic tape, a removable computer diskette, a random-access memory (RAM), a read-only memory (ROM), a rigid magnetic disc, and an optical disk, such as a CD-ROM, CD-R/W or DVD.

In an implementation, the modules, components and other features described herein can be implemented as discrete components or integrated in the functionality of hardware components such as ASICS, FPGAs, DSPs or similar devices.

A "hardware component" is a tangible (e.g., non-transitory) physical component (e.g., a set of one or more processors) capable of performing certain operations and may be configured or arranged in a certain physical manner. A hardware component may include dedicated circuitry or logic that is permanently configured to perform certain operations. A hardware component may be or include a special-purpose processor, such as a field programmable gate array (FPGA) or an ASIC. A hardware component may also include programmable logic or circuitry that is temporarily configured by software to perform certain operations.

Accordingly, the phrase "hardware component" should be understood to encompass a tangible entity that may be physically constructed, permanently configured (e.g., hardwired), or temporarily configured (e.g., programmed) to operate in a certain manner or to perform certain operations described herein.

In addition, the modules and components can be implemented as firmware or functional circuitry within hardware devices. Further, the modules and components can be implemented in any combination of hardware devices and software components, or only in software (e.g., code stored or otherwise embodied in a machine-readable medium or in a transmission medium).

Unless specifically stated otherwise, as apparent from the following discussion, it is appreciated that throughout the description, discussions utilizing terms such as "receiving", "determining", "comparing ", "enabling", "maintaining," "identifying, "obtaining", "taking", "classifying", "training", "associating", "providing", "detecting", "analysing", "rendering" or the like, refer to the actions and processes of a computer system, or similar electronic computing device, that manipulates and transforms data represented as physical (electronic) quantities within the computer system's registers and memories into other data similarly represented as physical quantities within the computer system memories or registers or other such information storage, transmission or display devices.

## Claims

1. A method of training a computer-implemented classifier (304) for classifying a surface portion of a surface (108) as one of a predefined set of surface types, wherein the classifier takes a spot image (302) of a surface portion as an input and produces an output (306) indicating a surface type of the predefined set, the method comprising:
obtaining a data set of spot images (302) of surface portions, wherein each spot image comprises an image of a spot on a respective surface portion, the spot on the respective surface portion resulting from a beam of light generated by a light source (102) and impinging on the respective surface portion and the data set associates each spot image (302) with a corresponding surface type; and
training the classifier (304) using the data set,
wherein obtaining the spot image (302) comprises detecting the spot in a captured image and extracting a cropped image of the captured image comprising the spot and a border around the spot,
wherein the spot is bright relative to a surrounding area,
wherein at least a quarter of image pixels of each spot image (302) correspond to the spot and have a pixel value in the top ten percentiles of pixel values of the pixels of the spot image, and
wherein the set of predefined surface types comprises biological tissue surfaces.

2. A method of classifying a surface portion as one of a predefined set of surface types, wherein a classifier takes a spot image( 302) of a surface portion as a input and produces an output (306) indicating a surface type of the predefined set, the method comprising:
obtaining a spot image (302) of a spot on the surface portion resulting from a beam of light generated by a light source (102) and impinging on the surface portion;
providing the spot image (302) as an input to the classifier (304), wherein the classifier (304) was trained using a method according to claim 1;
obtaining the output (306) of the classifier in response to the spot image (302); and determining a surface type of the surface portion based on the output (306),
wherein obtaining the spot image (302) comprises detecting the spot in a captured image and extracting a cropped image of the captured image comprising the spot and a border around the spot,
wherein the spot is bright relative to a surrounding area,
wherein at least a quarter of image pixels of each spot image (302) correspond to the spot and have a pixel value in the top ten percentiles of pixel values of the pixels of the spot image, and
wherein the set of predefined surface types comprises biological tissue surfaces.

3. A method according to claim 1 or 2 comprising:
obtaining a plurality of spot images (302), each spot image (302) corresponding to a spot on a respective surface portion of the surface resulting from a respective beam of light generated by a light source (102) and impinging on the respective surface portion;
providing each spot image (302) as an input to a classifier, wherein the classifier was trained using a method according to claim 1;
obtaining an output of the classifier in response to each spot image; and
determining a surface type of the respective surface portion based on each output.

4. A method according to claim 3, wherein obtaining the spot images comprises detecting each spot in a captured image and extracting a respective cropped image of the captured image comprising the spot and a border around the spot.

5. A method according to claim 3 or 4, comprising altering an image of the surface for display on a display device to visually indicate in the displayed image (308) the corresponding determined surface type for each of the surface portions.

6. A method according to any one of claims 3 to 5, wherein the respective beams are projected onto the surface (108) according to a predetermined pattern, the method comprising:
analysing a pattern of the spots on the surface (108) to determine a three-dimensional shape of the surface (108).

7. A method according to claim 6 comprising rendering a view of the three-dimensional shape of the surface (108) visually indicating the determined surface type for each of the surface portions.

8. A method according to any preceding claim, wherein the set of predefined surface types comprises one or more of the surface types of muscle, fat, bone and skin surfaces.

9. A method according to any previous claim, wherein the classifier takes as a further input one or more values indicative of a distance between a light source (102) used to generate the beam and the surface (108) and/or a distance between an image capture (110) device used to capture the image and the surface (108).

10. A method according to any preceding claim, wherein a beam diameter of the beam is less than 3mm at the surface.

11. One or more computer-readable media comprising coded instructions that, when run on a computing device, implement a method as claimed in any preceding claim.

12. A system for classifying a surface portion as one of a predefined set of surface types, the system comprising:
a light source (102) for generating one or more light beams;
an image capture device (110) for capturing images of respective spots resulting from the one or more light beams impinging on a surface (108);
a processor (116, 122, 900, 902) coupled to the image capture device and configured to implement a method according to claim 2 or any one of claims 3 to 10 when dependent on claim 2.

## Patentansprüche

1. Verfahren zum Trainieren eines computerimplementierten Klassifizierers (304) zum Klassifizieren eines Oberflächenabschnitts einer Oberfläche (108) als einen aus einem vordefinierten Satz von Oberflächentypen, wobei der Klassifizierer ein Punktbild (302) eines Oberflächenabschnitts als eine Eingabe nimmt und eine Ausgabe (306) produziert, die einen Oberflächentyp des vordefinierten Satzes angibt, wobei das Verfahren umfasst:
Erhalten eines Datensatzes von Punktbildern (302) von Oberflächenabschnitten, wobei jedes Punktbild ein Bild eines Punktes auf einem jeweiligen Oberflächenabschnitt umfasst, wobei der Punkt auf dem jeweiligen Oberflächenabschnitt aus einem von einer Lichtquelle (102) erzeugten Lichtstrahl resultiert und auf den jeweiligen Oberflächenabschnitt auftrifft, und der Datensatz jedes Punktbild (302) einem entsprechenden Oberflächentyp zuordnet; und
Trainieren des Klassifizierers (304) unter Verwendung des Datensatzes,
wobei das Erhalten des Punktbildes (302) das Detektieren des Punktes in einem aufgenommenen Bild und das Extrahieren eines beschnittenen Bildes des aufgenommenen Bildes umfasst, das den Punkt und einen Rand um den Punkt umfasst,
wobei der Punkt relativ zu einem umgebenden Bereich hell ist,
wobei mindestens ein Viertel der Bildpixel jedes Punktbildes (302) dem Punkt entspricht und einen Pixelwert in den oberen zehn Perzentilen der Pixelwerte der Pixel des Punktbildes aufweist, und
wobei der Satz von vordefinierten Oberflächentypen biologische Gewebeoberflächen umfasst.

2. Verfahren zum Klassifizieren eines Oberflächenabschnitts als einen aus einem vordefinierten Satz von Oberflächentypen, wobei ein Klassifizierer ein Punktbild (302) eines Oberflächenabschnitts als eine Eingabe nimmt und eine Ausgabe (306) produziert, die einen Oberflächentyp des vordefinierten Satzes angibt, wobei das Verfahren umfasst:
Erhalten eines Punktbildes (302) eines Punktes auf dem Oberflächenabschnitt, das sich aus einem Lichtstrahl ergibt, der durch eine Lichtquelle (102) erzeugt wird und auf den Oberflächenabschnitt auftrifft;
Bereitstellen des Punktbildes (302) als eine Eingabe an den Klassifizierer (304), wobei der Klassifizierer (304) unter Verwendung eines Verfahrens nach Anspruch 1 trainiert wurde;
Erhalten der Ausgabe (306) des Klassifizierers als Reaktion auf das Punktbild (302); und
Bestimmen eines Oberflächentyps des Oberflächenabschnitts basierend auf der Ausgabe (306),
wobei das Erhalten des Punktbildes (302) das Detektieren des Punktes in einem aufgenommenen Bild und das Extrahieren eines beschnittenen Bildes des aufgenommenen Bildes umfasst, das den Punkt und einen Rand um den Punkt umfasst,
wobei der Punkt relativ zu einem umgebenden Bereich hell ist,
wobei mindestens ein Viertel der Bildpixel jedes Punktbildes (302) dem Punkt entspricht und einen Pixelwert in den oberen zehn Perzentilen der Pixelwerte der Pixel des Punktbildes aufweist, und
wobei der Satz von vordefinierten Oberflächentypen biologische Gewebeoberflächen umfasst.

3. Verfahren nach Anspruch 1 oder 2, das Folgendes umfasst:
Erhalten einer Mehrzahl von Punktbildern (302), wobei jedes Punktbild (302) einem Punkt auf einem jeweiligen Oberflächenabschnitt der Oberfläche entspricht, der sich aus einem jeweiligen Lichtstrahl ergibt, der von einer Lichtquelle (102) erzeugt wird und auf dem jeweiligen Oberflächenabschnitt auftrifft;
Bereitstellen eines jeden Punktbildes (302) als eine Eingabe an einen Klassifizierer, wobei der Klassifizierer unter Verwendung eines Verfahrens nach Anspruch 1 trainiert wurde;
Erhalten einer Ausgabe des Klassifizierers als Reaktion auf jedes Punktbild; und
Bestimmen eines Oberflächentyps des jeweiligen Oberflächenabschnitts basierend auf jeder Ausgabe,

4. Verfahren nach Anspruch 3, wobei das Erhalten der Punktbilder das Detektieren jedes Punktes in einem aufgenommenen Bild und das Extrahieren eines jeweiligen beschnittenen Bildes des aufgenommenen Bildes umfasst, das den Punkt und einen Rand um den Punkt umfasst.

5. Verfahren nach Anspruch 3 oder 4, das das Ändern eines Bildes der Oberfläche zur Anzeige auf einer Anzeigevorrichtung umfasst, um in dem angezeigten Bild (308) den entsprechenden bestimmten Oberflächentyp für jeden der Oberflächenabschnitte visuell anzugeben.

6. Verfahren nach einem der Ansprüche 3 bis 5, wobei die jeweiligen Strahlen gemäß einem vorbestimmten Muster auf die Oberfläche (108) projiziert werden, wobei das Verfahren umfasst:
Analysieren eines Musters der Punkte auf der Oberfläche (108), um eine dreidimensionale Form der Oberfläche (108) zu bestimmen.

7. Verfahren nach Anspruch 6, das das Rendern einer Ansicht der dreidimensionalen Form der Oberfläche (108) umfasst, die den bestimmten Oberflächentyp für jeden der Oberflächenabschnitte visuell angibt.

8. Verfahren nach einem der vorhergehenden Ansprüche, wobei der Satz von vordefinierten Oberflächentypen einen oder mehrere der Oberflächentypen von Muskel-, Fett-, Knochen- und Hautoberflächen umfasst.

9. Verfahren nach einem der vorhergehenden Ansprüche, wobei der Klassifizierer als weitere Eingabe einen oder mehrere Werte nimmt, die kennzeichnend für einen Abstand zwischen einer Lichtquelle (102), die zum Erzeugen des Strahls verwendet wird, und der Oberfläche (108) ist, und/oder für einen Abstand zwischen einer Bildaufnahmevorrichtung (110), die zum Erfassen des Bildes verwendet wird, und der Oberfläche (108).

10. Verfahren nach einem der vorhergehenden Ansprüche, wobei ein Strahldurchmesser des Strahls an der Oberfläche weniger als 3 mm beträgt.

11. Ein oder mehrere computerlesbare Medien, die codierte Anweisungen umfassen, die, wenn sie auf einer Rechenvorrichtung laufen, ein Verfahren nach einem der vorhergehenden Ansprüche implementieren.

12. System zum Klassifizieren eines Oberflächenabschnitts als einen aus einem vordefinierten Satz von Oberflächentypen, wobei das System umfasst:
eine Lichtquelle (102) zum Erzeugen eines oder mehrerer Lichtstrahlen;
eine Bildaufnahmevorrichtung (110) zum Aufnehmen von Bildern von jeweiligen Punkten, die sich aus dem einen oder mehreren Lichtstrahlen ergeben, die auf eine Oberfläche (108) auftreffen;
einen Prozessor (116, 122, 900, 902), der mit der Bildaufnahmevorrichtung gekoppelt und dazu ausgelegt ist, ein Verfahren nach Anspruch 2 oder einen der Ansprüche 3 bis 10, wenn von Anspruch 2 abhängig, implementiert.

## Revendications

1. Procédé pour entraîner un classificateur (304) mis en œuvre par ordinateur pour classer une portion de surface d'une surface (108) dans l'un des ensembles prédéfinis de types de surfaces, où le classificateur prend une image de tache (302) d'une portion de surface comme entrée et produit une sortie (306) indiquant un type de surface de l'ensemble prédéfini, le procédé comprenant :
l'obtention d'un ensemble de données d'images de tache (302) de portions de surface, où chaque image de tache comprend une image d'une tache sur une portion de surface respective, la tache sur la portion de surface respective résultant d'un faisceau de lumière généré par une source de lumière (102) et frappant la portion de surface respective, et l'ensemble de données associe chaque image de tache (302) à un type de surface correspondant ; et
la formation du classificateur (304) à l'aide de l'ensemble de données,
où l'obtention de l'image de la tache (302) comprend la détection de la tache dans une image capturée, et l'extraction d'une image recadrée de l'image capturée comprenant la tache et une bordure autour de la tache,
où la tache est brillante par rapport à la zone environnante,
où au moins un quart des pixels de chaque image de la tache (302) correspond à la tache et a une valeur de pixel dans les dix premiers centiles des valeurs de pixel de l'image de la tache, et
où l'ensemble des types de surfaces prédéfinis comprend des surfaces de tissus biologiques.

2. Procédé de classification d'une portion de surface en tant que type de surface d'un ensemble prédéfini de types de surfaces, dans lequel un classificateur prend une image de tache (302) d'une portion de surface comme entrée et produit une sortie (306) indiquant un type de surface de l'ensemble prédéfini, le procédé comprenant :
l'obtention d'une image de tache (302) d'une tache sur la portion de surface résultant d'un faisceau de lumière généré par une source de lumière (102) et frappant la portion de surface ;
la fourniture de l'image de tache (302) comme entrée pour le classificateur (304), le classificateur (304) ayant été entraîné à l'aide d'un procédé selon la revendication 1 ;
l'obtention de la sortie (306) du classificateur en réponse à l'image de tache (302) ; et
la détermination d'un type de surface de la portion de surface sur la base de la sortie (306),
où l'obtention de l'image de tache (302) comprend la détection de la tache dans une image capturée, et l'extraction d'une image recadrée de l'image capturée comprenant la tache et une bordure autour de la tache,
où la tache est brillante par rapport à la zone environnante,
où au moins un quart des pixels de chaque image de la tache (302) correspond à la tache et a une valeur de pixel dans les dix premiers centiles des valeurs de pixel de l'image de la tache, et
où l'ensemble des types de surface prédéfinis comprend des surfaces de tissus biologiques.

3. Procédé selon la revendication 1 ou la revendication 2, le procédé comprenant :
l'obtention d'une pluralité d'images de tache (302), chaque image de tache (302) correspondant à une tache sur une portion de surface respective résultant d'un faisceau de lumière respectif généré par une source de lumière (102) et frappant la portion de surface respective ;
la fourniture de chaque image de tache (302) en tant qu'entrée pour un classificateur, le classificateur ayant été entraîné à l'aide d'un procédé selon la revendication 1 ;
l'obtention d'une sortie du classificateur en réponse à chaque image de tache ; et
la détermination d'un type de surface de la portion de surface respective sur la base de chaque sortie.

4. Procédé selon la revendication 3, dans lequel l'obtention des images de tache comprend la détection de chaque tache dans une image capturée et l'extraction d'une image recadrée respective de l'image capturée comprenant la tache et une bordure autour de la tache.

5. Procédé selon la revendication 3 ou la revendication 4, comprenant la modification d'une image de la surface pour l'affichage sur un dispositif d'affichage afin d'indiquer visuellement dans l'image affichée (308) le type de surface déterminé correspondant pour chacune des portions de surface.

6. Procédé selon l'une quelconque des revendications 3 à 5, dans lequel les faisceaux respectifs sont projetés sur la surface (108) selon un motif prédéterminé, le procédé comprenant :
l'analyse d'un modèle de taches sur la surface (108) pour déterminer une forme tridimensionnelle de la surface (108) .

7. Procédé selon la revendication 6, comprenant le rendu d'une vue de la forme tridimensionnelle de la surface (108) indiquant visuellement le type de surface déterminé pour chacune des portions de surface.

8. Procédé selon l'une quelconque des revendications précédentes, dans lequel l'ensemble de types de surfaces prédéfinis comprend un ou plusieurs des types de surfaces de muscle, de graisse, d'os et de peau.

9. Procédé selon l'une quelconque des revendications précédentes, dans lequel le classificateur prend comme entrée supplémentaire une ou plusieurs valeurs indicatives d'une distance entre une source de lumière (102) utilisée pour générer le faisceau et la surface (108) et/ou une distance entre un dispositif de capture d'image (110) utilisé pour capturer l'image et la surface (108) .

10. Procédé selon l'une quelconque des revendications précédentes, dans lequel un diamètre de faisceau est inférieur à 3 mm au niveau de la surface.

11. Un ou plusieurs supports lisibles par ordinateur comprenant des instructions codées qui, lorsqu'elles sont exécutées sur un dispositif informatique, mettent en œuvre un procédé tel que revendiqué dans l'une quelconque des revendications précédentes.

12. Système permettant de classer une portion de surface dans un ensemble prédéfini de types de surfaces, le système comprenant :
une source de lumière (102) pour générer un ou plusieurs faisceaux de lumière ;
un dispositif de capture d'image (110) pour capturer des images de taches respectives résultant de l'impact d'un ou de plusieurs faisceaux de lumière sur une surface (108) ;
un processeur (116, 122, 900, 902) couplé au dispositif de capture d'image et configuré pour mettre en œuvre un procédé selon la revendication 2 ou l'une quelconque des revendications 3 à 10 lorsqu'elles dépendent de la revendication 2.
